# EUROPÄISCHE PATENTSCHRIFT

(11) **EP 0 356 835 B1**
(45) Veröffentlichungstag und Bekanntmachung des Hinweises auf die Patenterteilung: **15.03.1995**
(21) Anmeldenummer: 89115254.8
(22) Anmeldetag: 18.08.1989
(51) Int. Cl.: B60L 5/28

(54) **Stromabnehmer für elektrisch angetriebene Fahrzeuge mit Einrichtung zur Schnellabsenkung**
Pantograph for electrically-propelled vehicles with a fast-lowering device
Pantographe pour véhicules à propulsion électrique comportant un dispositif de descente rapide

(30) Priorität: 25.08.1988 DE 3828889
(43) Veröffentlichungstag der Anmeldung: 07.03.1990
(73) Patentinhaber: DOZLER GMBH, D-85511 Ottobrunn (DE)
(72) Erfinder: Beck, Wolfgang, Dipl.-Ing., D-8000 München 90 (DE); Lengfelder, Edmund, Prof.-Dr., D-8000 München 82 (DE)
(74) Vertreter: Heusler, Wolfgang, Dipl.-Ing.

(56) Entgegenhaltungen:
- EP-A- 0 042 334
- EP-A- 0 112 265
- CH-A- 542 067
- DE-A- 1 513 614

## Beschreibung

Die Erfindung bezieht sich auf Stromabnehmer elektrisch angetriebener Fahrzeuge mit Oberleitungsversorgung. Der Stromabnehmer ist mit einer selbsttätigen Einrichtung zur Schnellabsenkung ausgestattet, die ausgelöst wird, sobald auf die Wippe oder andere Teile des Stromabnehmers eine übermäßige Kraft wirksam wird, die geeignet ist, den Stromabnehmer selbst, Teile des Fahrzeugs oder das Oberleitungssystem zu beschädigen.

Die Erfindung kann sowohl bei Doppelscherenstromabnehmern als auch bei Halbscherenstromabnehmern, z. B. Einholmstromabnehmern, Anwendung finden. Der Stromabnehmer, hier beschrieben am Beispiel des Halbscherenstromabnehmers, besteht aus einem Grundrahmen, auf dem der Unterarm mit der Unterarmwelle drehbar gelagert ist. Das obere Ende des Unterarms ist als Gelenk ausgebildet, in dem der Oberarm des Stromabnehmers gelagert ist. Der Oberarm wird über eine Lenkerstange, die mit dem Grundrahmen verbunden ist, angelenkt. Die Lenkerstange kann je nach Ausführung des Stromabnehmers unterhalb oder oberhalb des Unterarms liegen.

Im Scheitelgelenk des Oberarms ist eine Wippe dreh- oder kippbar angeordnet, welche mit einem oder mehreren Schleifstücken ausgestattet ist und mit diesen den elektrischen Kontakt zum Fahrdraht herstellt. Die für den Kontakt der Schleifstücke am Fahrdraht erforderliche Anpreßkraft und die Anpassung an unterschiedliche Fahrdrahthöhen kommen dadurch zustande, daß über Hebel in die Unterarmwelle Kräfte eingeleitet werden, welche von Stahlfedern, durch Druckluft- oder Hydraulikzylinder oder durch einen Luftfederfaltenbalg aufgebracht werden. Das Anheben des Stromabnehmers aus der Ruhelage und das Absenken in die Ruhelage erfolgt im Falle eines Hubantriebs mit Stahlfeder über einen separaten, elektrisch, pneumatisch oder hydraulisch betriebenen Senkantrieb, im Falle eines pneumatischen oder hydraulischen Hubantriebs durch Einleiten oder Ablassen des Druckmediums.

Befinden sich bei bekannten Stromabnehmersystemen im Bereich des Fahrdrahtes Hindernisse und andere Störungen, so treten beim Anfahren mit Schleifstücken oder anderen Teilen des Stromabnehmers gegen diese Hindernisse oder Störstellen zum Teil erhebliche Kräfte auf, die den Stromabnehmer, das Fahrzeug oder das Oberleitungssystem beschädigen können. Kommt es infolge einer solchen Krafteinwirkung z. B. zum Bruch des Fahrdrahtes, so stellt sich der Stromabnehmer infolge des Wegfalls der durch den Fahrdraht bedingten Höhenführung auf die maximal mögliche Höhe auf. Da die Fahrzeuge zwischen dem Auftreten der Störung und dem Fahrzeugstillstand zum Teil noch erhebliche Strecken zurücklegen, können sowohl am Fahrzeug als auch insbesondere am Oberleitungssystem schwerste Schaden hervorgerufen werden. Von besonderer Bedeutung sind solche Schäden dann, wenn sie zur unmittelbaren Gefährdung von Menschen führen, z. B. bei Straßenbahnen über große Teile des Streckensystems oder bei Vollbahnen im Bahnhofsbereich.

Der Erfindung liegt die Aufgabe zugrunde, den Stromabnehmer möglichst schnell vom Fahrdraht zu lösen und abzusenken, sobald Hindernisse im Bereich des Fahrdrahts unter die Ebene der Kontaktfläche der Schleifstücke hinunterreichen oder ein Bruch der Fahrleitung auftritt und der Stromabnehmer mit zumindest einem Schleifstück oder anderen Teilen gegen die Hindernisse oder die Fahrdrahtaufhängungen anfährt und die dabei auftretenden Kräfte ein vorher festgelegtes, unschädliches Maß übersteigen.

Es sind Stromabnehmer mit Einrichtungen bekannt, bei denen eine beschleunigte Absenkung nach Auftreten einer unzulässigen Kraft im Bereich des Stromabnehmers herbeigeführt wird. In DE 521213 ist ein Stromabnehmer mit einer selbsttätigen Einrichtung zur Schnellabsenkung beschrieben.

Aus DE 2215258 ist ein Stromabnehmer bekannt, bei dem durch Auftreten übermäßiger Kräfte ein Scherbolzen abgeschert und dadurch die starre Verbindung zwischen Unterarm und Unterarmwelle gelöst wird. Die Verwendung von Scherbolzen zur Lastbegrenzung bei Stromabnehmern hat deshalb Nachteile, weil die zum Abscheren eines Scherbolzens erforderliche Kraft nicht genau definiert werden und erheblich schwanken kann und weil die Reibungsbeiwerte der durch den Scherbolzen miteinander verbundenen Teile die Auslösekraft deutlich beeinflussen. Ferner ist bei Scherbolzen durch die ständige dynamische Beanspruchung während des Fahrbetriebs mit einer Ermüdung bis hin zum Spontanbruch zu rechnen.

Eine andere Einrichtung zur Schnellabsenkung ist in US 3444338 beschrieben. Dort wird die Schnellabsenkung des Stromabnehmers dadurch herbeigeführt, daß die übermäßige Kraft den mit einem Rastenmechanismus versehenen Angriffspunkt der Hubfeder ausklinkt. Bei dieser Lösung sind Nachteile dadurch gegeben, daß erhebliche Unterschiede in den zur Auslösung der Schnellabsenkung führenden Kräften in Abhängigkeit von der Steighöhe des Stromabnehmers und der Fahrtrichtung zu verzeichnen sind.

In US 4413710 ist ein Stromabnehmer mit einer Einrichtung zur Schnellabsenkung beschrieben, bei dem die Wippe über einen Hebel und eine Drehmomentbegrenzung mit dem Scheitelrohr des Oberarms verbunden ist. Durch die Auslenkung infolge einer unzulässigen Kraft wird ein Seilzug betätigt, welcher von der Wippe entlang dem Oberarm und dem Unterarm zur Unterarmwelle geführt ist und der durch Zug an einer Sperrklinke einen Angriffspunkt einer Hubfeder freigibt. Aus US 4413710 ist auch bekannt, den genannten Seilzug dadurch zu betätigen, daß bei Auftreten einer übermäßigen Kraft an der Wippe diese im Scheitelgelenk gedreht und durch eine Wippenlenkerstange die erforderliche Kraft zur Betätigung des Seilzugs aufgebracht wird. Auch hier zeigt sich als Nachteil, daß die eine Schnellabsenkung auslösende Kraft wiederum in erheblichem Umfang von der jeweiligen Steighöhe des Stromabnehmers abhängig ist. Ferner ist die Verwendung eines Seilzugs wegen Vereisungs- und Korrosionsgefahr und der damit verbundenen Möglichkeit des Blockierens problematisch.
Allen bekannten Ausführungen von Stromabnehmern mit Einrichtungen zur Schnellabsenkung ist der Nachteil gemeinsam, daß nach dem Ansprechen der Schnellabsenkung die Rückstellung in die normale Betriebsbereitschaft des Stromabnehmers nur mit einem erheblichen Aufwand, z. B. durch Montagearbeiten auf dem Fahrzeugdach, durch Auswechseln von Scherstiften und Spannen der Hubfeder, erreicht werden kann.

Der Versuch, beim Auftreten übermäßiger Kräfte die Betätigung des normalen Senkantriebs des Stromabnehmers herbeizuführen, wie z. B. in US 3444338 beschrieben, stellt keine zufriedenstellende Lösung des Problems dar, da bei den bekannten Senkantrieben vom Zeitpunkt des Senkbefehls bis zum Erreichen eines genügend großen Abstandes der Schleifstücke bzw. der Stromabnehmerteile vom Fahrdraht eine bis mehrere Sekunden benötigt werden. In dieser Zeitspanne können durch die Fahrzeuge, je nach Geschwindigkeit, Strecken bis zu einigen hundert Metern zurückgelegt werden.

Die EP-A 0 112 265 beschreibt einen Stromabnehmer für elektrisch angetriebene Fahrzeuge mit Oberleitungsversorgung, der im wesentlichen aus einem Grundrahmen und einem darauf aufgebauten Scherensystem besteht, welches eine Wippe mit Schleifstücken trägt. Ferner sind ein Hubantrieb zur Erzeugung der Schleifstückanpreßkraft und eine Einrichtung zur Schnellabsenkung vorgesehen, wobei bei Einleitung einer unzulässig hohen frontalen Kraft auf eine Komponente der Wippe diese um das Scheitelgelenk des Oberarms gedreht wird. Dadurch werden elektrische Schaltkontakte betätigt und ein Signal zur Auslösung der Schnellabsenkung erzeugt.

Demgegenüber besteht die Erfindung darin, daß die Wippe entweder in Bezug auf das Scheitelgelenk oder durch eine bewegliche Zone im Bereich des Oberarms in Fahrzeuglängsrichtung auslenkbar gelagert ist.

Gemäß einer Ausgestaltung der Erfindung ist die zur Auslösung der Schnellabsenkung führende Kraft über die gesamte Steighöhe des Stromabnehmers gleich, und die Schnellabsenkung ist nach Bruchteilen einer Sekunde erfolgt. Ferner kann nach einem durch ein Hindernis oder eine Störstelle im Bereich des Fahrdrahts ausgelösten Absenken des Stromabnehmers und nach dem Passieren des Hindernisses durch das Fahrzeug, welches durch den Schwung der Fahrt noch eine beträchtliche Wegstrecke zurücklegen kann, der Stromabnehmer, sofern die Schadenssituation dies zuläßt, nach selbsttätiger Rückstellung vom Fahrerstand aus wieder an den Fahrdraht angehoben werden, um die Fahrt zumindest bis zu einem Servicepunkt fortsetzen zu können oder die durch Hindernisse gestörte Strecke zu räumen. Ferner besteht die Möglichkeit, den nach Auslösung der Schnellabsenkung aus großer Höhe erfolgenden freien oder beschleunigten Fall des Stromabnehmers nach einer definierten Fallstrecke zu dämpfen und zusätzliche Schäden durch hartes Aufschlagen auf den Grundrahmen zu vermeiden. Möglich ist es außerdem, für den Stromabnehmer einen Hubantrieb zu schaffen, der schnelle Senkbewegungen zuläßt und die hier beschriebenen Aufgaben der Einrichtung zur Schnellabsenkung in optimaler Weise erfüllt. Die selbsttätige Schnellabsenkung soll auch dann ausgelöst werden, wenn das Fahrzeug versehentlich die mit Oberleitungen ausgestatteten Streckenabschnitte verläßt und sich der Stromabnehmer durch den Wegfall der Höhenführung auf die maximale Steighöhe aufstellt.

Durch die Erfindung werden erhebliche Verbesserungen und Vorteile gegenüber bekannten Systemen erreicht. Beim Anfahren eines Schleifstücks oder anderer Komponenten der Wippe oder des Oberarms gegen Hindernisse werden diese Teile im Bezug zum Scheitelgelenk des Oberarms oder zum Oberarm selbst bzw. zum Gelenk zwischen Ober- und Unterarm ausgelenkt. Die Teile, zwischen denen die Auslenkung erfolgt, sind durch einfachen Hebel, vorzugsweise jedoch durch Parallelogrammführung, Bahnführung oder eine Führung vermittels Stabfedern miteinander verbunden. Sowohl bei der Parallelogrammführung als auch bei der Führung mit Stabfedern, bei denen eine funktionelle Ähnlichkeit zur Parallelogrammführung gegeben ist, führt die Auslenkung des mit unzulässiger Kraft beaufschlagten Teils vorteilhafterweise gleichzeitig zu einer Bewegung nach unten, also vom Fahrdraht weg. Die Auslenkung erfolgt gegen Federkraft aus einem Ruhepunkt oder einer Ruhezone des ausgelenkten Teils heraus. Durch diese Ausführung wird erreicht, daß zur Erzielung einer definierten Auslenkung über die gesamte Steighöhe des Stromabnehmers die gleiche Kraft erforderlich ist und das System in beiden Fahrtrichtungen gleichermaßen arbeitet.

Die Auslenkung wird zum Ansteuern bzw. zum Auslösen von elektrischen, hydraulischen oder pneumatischen Betätigungselementen wie z. B. Tastern, Schaltern oder Ventilen verwendet, welche dann das Signal bzw. den Steuerbefehl zur Schnellabsenkung abgeben. Eine andere Ausführungsform der Erfindung besteht darin, daß sich Sensoren im Bereich der Wippe und anderen Komponenten des Stromabnehmers einschließlich im Bereich der Befestigungspunkte des Stromabnehmers und am Fahrzeug befinden, welche beim Auftreten von durch Hindernisse oder anderweitig entstehenden Kräften Ansteuerbefehle für die Auslösung der Schnellabsenkung abgeben.

Eine andere Ausführungsform der Erfindung besteht darin, daß den Schleifstücken einschließlich Auflaufhörnern oder der Wippe Auslösebügel in Fahrtrichtung gesehen vorgelagert sind, die beim Auftreffen auf ein Hindernis entweder selbst ausgelenkt werden oder Auslenkkräfte auf Komponenten der Wippe oder andere Stromabnehmerteile übertragen, dadurch Betätigungselemente auslösen und so die Schnellabsenkung herbeiführen.

Die Schnellabsenkung wird auch dann ausgelöst, wenn sich der Stromabnehmer durch Verlust der Höhenführung, also des Fahrdrahtes, auf seine maximale Höhe aufzustellen versucht. Dies wird gemäß der Erfindung dadurch bewirkt, daß kurz vor Erreichen der maximalen Steighöhe ein Betätigungselement, z. B. Taster, Endschalter oder Ventil, ebenfalls einen Steuerbefehl abgibt und auf diese Weise eine der nachfolgend beschriebenen Betätigungseinheiten aktiviert. Die Erfindung besteht weiter darin, daß vermittels der beschriebenen Betätigungselemente elektrische, elektromagnetische, hydraulische oder pneumatische Betätigungseinheiten aktiviert werden.

Erfindungsgemäß werden durch die Signale und Steuerbefehle Betätigungseinheiten wie Elektromagnete, Hydraulikzylinder etc. aktiviert, welche z. B. durch Lösen von Arretierungen zumindest einen der Angriffspunkte des Hubantriebs freigeben, der einerseits mit der Unterarmwelle und andererseits mit dem Grundrahmen oder einer weiteren Unterarmwelle verbunden ist und die Schleifstückanpreßkraft erzeugt, und welche durch Aktivierung eines Brems- oder Freilaufsystems eine weitere Längenveränderung des Hubantriebs in Kraftrichtung verhindern.
Ferner wird durch aktivierte Betätigungseinheiten die tatsächliche oder die funktionelle Länge der Lenkerstange verändert, z. B. durch Lösen von Arretierungen, sowie auch bei diesen Ausführungen durch Aktivierung eines Brems- oder Freilaufsystems eine weitere Längenveränderung des Hubantriebs in Kraftrichtung verhindert.
Schließlich wird gemäß der Erfindung durch die Aktivierung von Betätigungseinheiten eine sprunghafte Reduzierung der vom Hubantrieb aufgebrachten Kraft herbeiführt, z. B. durch sprunghaften Druckabbau in einem pneumatischen oder hydraulischen Hubantrieb mit Hilfe eines Magnetventils hoher Durchflußleistung und kurzer Ansprechzeit, welches sich direkt am Hubantrieb befindet.

Hierdurch fällt infolge des Eigengewichts oder durch eine zusätzlich eingeleitete Kraft z. B. eine Feder beschleunigt, der Stromabnehmer nach unten und entfernt sich dadurch aus dem Hindernisbereich.

Obwohl die Erfindung bei allen bekannten Arten von Hubantrieben zur Erzeugung der Schleifstückanpreßkraft verwendet werden kann, ist dem Einsatz pneumatischer oder hydraulischer Hubantriebe dann der Vorzug zu geben, wenn eine einfache, selbsttätige Rückstellung der Einrichtung zur Schnellabsenkung, möglichst vom Führerstand des Fahrzeugs aus, erreicht werden soll. Diese Hubantriebe sind durch die Betätigung von Ventilen einfach kraftlos zu machen und sie können durch Federkraft in ihre Ausgangs- bzw. Ruheposition gebracht werden. Dadurch werden die durch Lösen der Arretierungen freigegebenen Angriffspunkte des Hubantriebs an Unterarm, Grundrahmen etc. rückgestellt.

In einer Ausführungsform der Erfindung wird als Hubantrieb für die Erzeugung der Schleifstückanpreßkraft ein pneumatisch betriebener Rollmembranantrieb verwendet, dessen bewegtes Teil, der Kolben, durch eine Führung so geführt wird, daß sich Kolben und Zylinderwand sowie die daran anliegenden Rollmembranflächen nicht berühren. In einer anderen Ausführungsform der Erfindung ist dem Rollmembranantrieb zur Rückstellung des Kolbens oder zur Anpassung der Kennlinie der über den Weg des Kolbens abgegebenen Kraft eine zusätzliche Feder zugeordnet. In einer weiteren Ausführungsform wird der Rollmembranantrieb ohne äußere (Zylinderrohr) oder innere (kolbenseitige) Abstützung der Rollmembran betrieben. Erfindungsgemäß wird der Rollmembranantrieb auch bei Stromabnehmern ohne Schnellabsenkeinrichtung zur Erzeugung der Schleifstückanpreßkraft oder als Senkantrieb verwendet.

Gegenüber einem Antrieb aus Stahlfedern besitzen Luftantriebe generell den Vorteil, daß die Federkennlinie, also die Kraft-Weg-Beziehung, in einem weiten Bereich über den Druck verändert werden kann. Ferner kann der Luftantrieb bei beliebigen Stellungen innerhalb des möglichen Gesamthubs sehr einfach durch Druckentlastung kraftlos gemacht werden, was bei Stahlfedern einen erheblichen Aufwand an Zusatzeinrichtungen bedeutet. Bei Stromabnehmern hat der Rollmembranantrieb auch gegenüber herkömmlichen Druckluftzylindern deutliche Vorteile. Bei ihm gibt es keine gegeneinander gleitenden Flächen, die abgedichtet und geschmiert werden müssen und die bei Korrosionsschäden rasch zum Funktionsverlust führen können. Da beim Rollmembranantrieb die Passungsgenauigkeit und Steifigkeit von Zylinder und Kolben nur eine untergeordnete Rolle spielen, können dünne Wandstärken gewählt werden, was erheblich zur Gewichtsreduzierung beiträgt.

Auch gegenüber dem als Hubantrieb bei Stromabnehmern bekannten Faltenbalg sind beim Rollmembranantrieb deutliche Vorteile vorhanden. Der Faltenbalg braucht massive Stützringe, um ein Herausstülpen der Innenfalten zu verhindern. Diese erhöhen jedoch das Gewicht beträchtlich. Ferner muß das Balgmaterial hohe Zugkräfte im Bereich der Außenfalte aufnehmen können. Dies bedingt einen hochfesten Wandaufbau und wiederum zusätzliches Gewicht. Da beim Rollmembranantrieb die Druckkräfte überwiegend durch Zylinderwand und Kolben aufgenommen werden und der dazwischen liegende Spalt schmal gehalten werden kann, sind im Vergleich zum Faltenbalg wesentlich leichtere Membranmaterialien verwendbar.

Durch die Nachgiebigkeit des Materials sowie durch die funktionsbedingte Formänderung ist der Außendurchmesser des Faltenbalges entlang dem bei der Hubarbeit zurückgelegten Weg erheblichen Schwankungen unterworfen. Deshalb weist der Rollmembranantrieb, bei dem der Außendurchmesser konstant gehalten werden kann, eine wesentlich bessere Linearität der Kraft- und Federkennlinie auf als der Faltenbalg und nimmt weniger Platz im Stromabnehmer in Anspruch.

Der verwendete Rollmembranantrieb erfüllt in seinen Merkmalen die Erfordernisse eines Hubantriebs und der Einrichtung zur Schnellabsenkung insbesondere bezüglich der Ansprechgeschwindigkeit, gleichzeitiger Eignung als Dämpfungselement und bezüglich Störsicherheit weitaus besser als bekannte Hubantriebe.

Ausführungsbeispiele der Erfindung sind nachstehend beschrieben und durch Zeichnungen erläutert.

Es zeigen
Fig. 1a die Seitansicht eines Halbscherenstromabnehmers mit Grundrahmen, Unter- und Oberarm, Lenkerstange, Wippe sowie den Fahrdraht mit Hindernissen,
Fig. 1b die Seitansicht einer Wippe,
Fig. 2 die Seitansicht einer Wippe mit vorgelagerten Auslösebügeln,
Fig. 3 und Fig. 4 die Seitansicht eines Stromabnehmers im Bereich des Grundrahmens mit Rollmembranantrieb, Unterarmwelle, Unterarm, Freilaufeinrichtung und Betätigungseinheiten zum Lösen von Arretierungen,
Fig. 5 die Seitansicht eines Stromabnehmers mit einer in der Länge veränderlichen Lenkerstange,
Fig. 6 die Seitansicht eines Lagerpunkts der Lenkerstange am Grundrahmen eines Stromabnehmers.

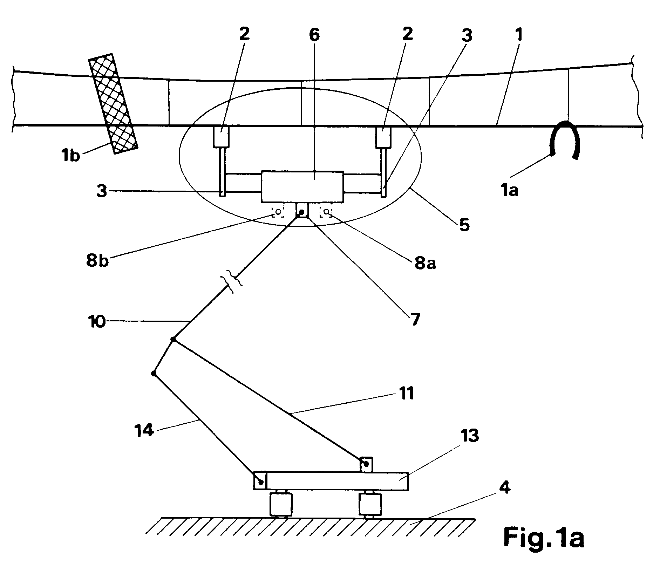

In Fig. 1a ist ein Halbscherenstromabnehmer in seitlicher Ansicht dargestellt, der auf dem Wagenkasten (4) montiert ist. Der Stromabnehmer besteht aus Grundrahmen (13), Unterarm (11), Oberarm (10), Lenkerstange (14) und Wippe (5), die mit den Schleifstücken (2) am Fahrdraht (1) anliegt. Im Bereich des Fahrdrahts sind Hindernisse (1a, 1b) dargestellt, welche unter die Ebene der Kontaktfläche der Schleifstücke (2) hinunterragen. Bewegt sich das Fahrzeug mit dem Stromabnehmer (in der Zeichnung) nach rechts und stößt das rechte Schleifstück gegen das Hindernis (1a), so erfolgt die Einleitung einer Kraft zunächst in das rechte Schleifstück. Diese Kraft wird über den Schleifstückträger (3) des rechten Schleifstücks und andere Komponenten auf das Wippenchassis (6) übertragen. In diesem Fall befindet sich der Scheitelgelenkträger (7) der Wippe (5) nach der Auslenkung in der Position 8a. Bei umgekehrter Fahrtrichtung des Fahrzeugs wird beim Anfahren der Wippe (5) gegen das Hindernis (1b) die Wippe nach rechts ausgelenkt, der Scheitelgelenkträger (7) kommt dann in Position 8b zu liegen.

Die Wippe ist im Scheitelgelenk dreh- oder kippbar gelagert. Erfindungsgemäß wird sie zusätzlich in Fahrzeuglängsrichtung entweder im Bezug auf das Scheitelgelenk oder durch eine bewegliche Zone im Bereich des Oberarms auslenkbar gelagert. Durch diese Auslenkung werden dann, wie beschrieben, Betätigungselemente wie z. B. Taster oder Ventile ausgelöst, welche dann die Befehle zur Schnellabsenkung abgeben.

In Fig. 1b ist eine Stromabnehmerwippe in Seitansicht dargestellt, die mit den Schleifstücken (2) am Fahrdraht (1) anliegt. Die Schleifstücke sind mit dem Wippenchassis (6) verbunden. Über ein Hebel- und Lenkersystem (30) ist das Wippenchassis (6) mit dem Scheitelgelenkträger (7) verbunden, der seinerseits über das Scheitelgelenk mit dem Oberarm (10) verbunden ist. Das Hebel- und Lenkersystem (30) bildet eine Parallelogrammführung und läßt die Auslenkung des Wippenchassis (6) gegenüber dem Scheitelgelenkträger (7) in beiden Fahrtrichtungen zu. Durch Federn, welche am Hebel- und Lenkersystem (30) und am Wippenchassis (6) angreifen, wird das Wippenchassis (6) gegenüber dem Scheitelgelenkträger (7) in einer neutralen Ruheposition gehalten. Bei Anfahren an ein Hindernis mit den Schleifstücken (2) erfolgt eine Auslenkung aus dieser Ruhelage gegen die Federkraft. Die Auslenkung bewirkt ein Ansprechen der am Scheitelgelenkträger befestigten (in der Zeichnung nicht dargestellten) Betätigungselemente, die die Betätigungseinheiten im Bereich von Unterarm und Grundrahmen ansteuern und dadurch die Schnellabsenkung auslösen.

Die Parallelogrammführung hat den Vorteil, daß das Wippenchassis (6) bei einer Auslenkung gleichzeitig eine Abwärtsbewegung vollzieht und sich vom Fahrdraht entfernt.

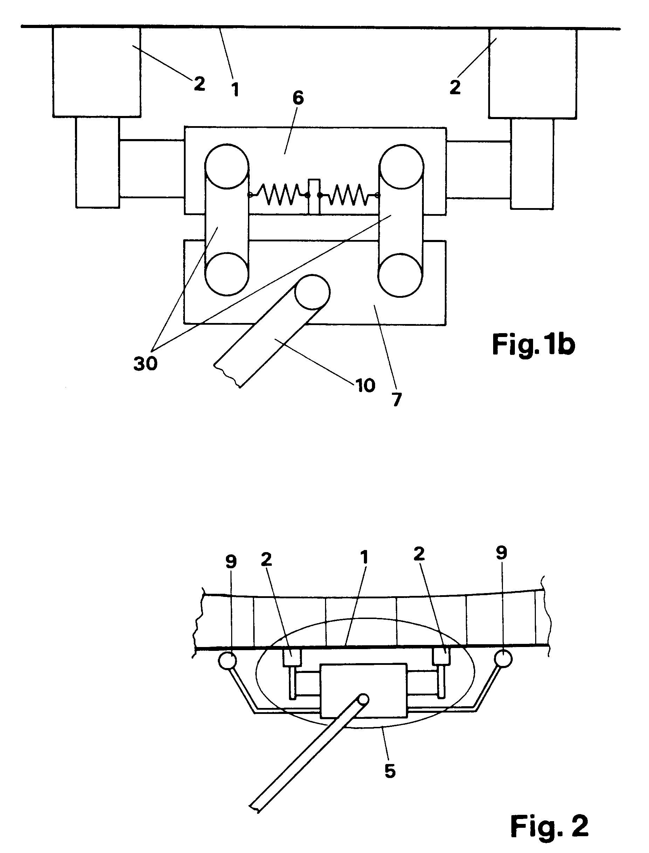

In Fig. 2 ist eine Stromabnehmerwippe (5) in Seitansicht dargestellt, die mit den Schleifstücken (2) am Fahrdraht (1) anliegt. Den Schleifstücken (2) sind Auslösebügel (9) jeweils in Fahrtrichtung gesehen vorgelagert, die entweder selbst ausgelenkt werden oder die Auslenkkräfte auf andere Teile der Wippe oder des Stromabnehmers übertragen. Durch diese Auslenkung werden dann besagte Betätigungselemente zum Ansprechen gebracht. Die Auslösebügel sind so angeordnet, daß sie einen geringen Abstand zum Fahrdraht aufweisen.

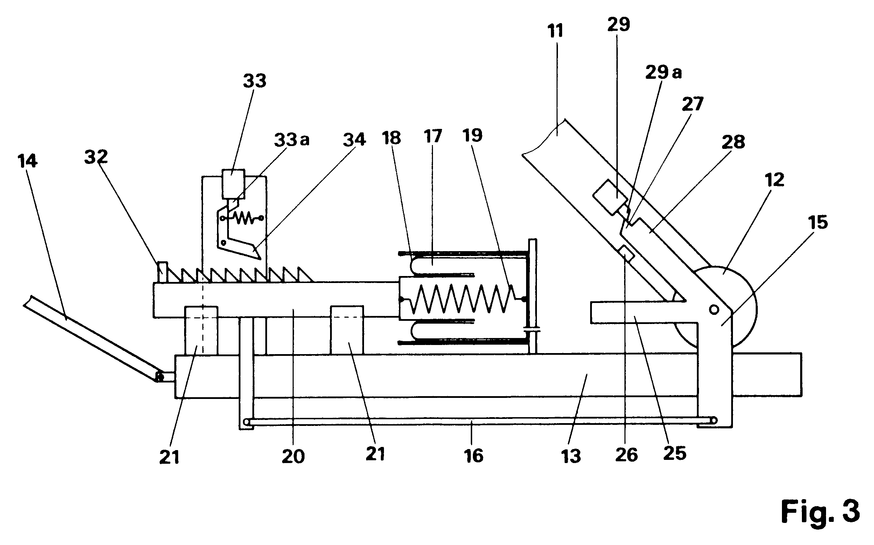

In Fig. 3 ist die Seitansicht eines Stromabnehmers im Bereich des Grundrahmens mit Rollmembranantrieb, Freilaufeinrichtung und Betätigungseinheiten zum Lösen von Arretierungen dargestellt. Der Unterarm (11) ist mit der Unterarmwelle (12) im Grundrahmen (13) drehbar gelagert. Unterarm und Unterarmwelle bilden eine starr miteinander verbundene Einheit. An der Unterarmwelle ist drehbar der Antriebshebel (15) gelagert. Dieser ist über die Verbindungsstange (16) und die Antriebsstange (20) mit dem Rollmembranantrieb (17) verbunden. Der Antriebshebel (15) stützt sich über den Rastarm (28) und die Rastnase (27) gegen den Sperrbolzen (29a) der Betätigungseinheit (29), die starr mit dem Unterarm (11) verbunden ist. Der Kolben des Rollmembranantriebs ist mit der Antriebsstange (20) im Antriebsstangenlager (21) verschiebbar gelagert. Wird der Rollmembranantrieb mit Druckluft versorgt, so bewegt sich der Kolben (in der Zeichnung) nach links, die Rollmembran (18) rollt vom Kolben ab und auf die Zylinderwand auf. Über einen fest mit der Antriebsstange (20) verbundenen Ausleger und die Verbindungsstange (16) werden Zugkräfte in den Antriebshebel (15) eingeleitet, wodurch der Unterarm angehoben und die Schleifstücke gegen den Fahrdraht gepreßt werden.

Die beim Anfahren gegen ein Hindernis durch Betätigungselemente im Bereich der Wippe erzeugten Steuerbefehle erreichen die Betätigungseinheiten (29) und (33), wodurch diese ihre Sperrbolzen (29a) und (33a) zurückziehen. Da sich nun die Rastnase (27) des Rastarms (28) nicht mehr am Sperrbolzen (29a) abstützen kann, ist der Antriebshebel (15) freigegeben. Durch den Wegfall der Belastung am Antriebshebel will nun der Kolben des Rollmembranantriebs weiter nach links aus dem Zylinder austreten. Dies wird jedoch dadurch verhindert, daß gleichzeitig mit der Aktivierung der Betätigungseinheit (29) der Sperrbolzen (33a) der Betätigungseinheit (33) die Sperrklinke (34) freigegeben hat, die nun in die Zahnleiste auf der Antriebsstange (20) eingreift, wodurch ein Freilauf gebildet wird, der die Bewegung der Antriebsstange (20) und damit des Kolbens nur mehr nach rechts, also in den Zylinder hinein, zuläßt, nach links jedoch sperrt. Der Kolben des Rollmembranantriebs wird dadurch in seiner Lage gehalten.

Durch die Freigabe des Rastarms (28) fällt der Stromabnehmer durch Schwerkraft nach unten, die Wippe entfernt sich aus dem Hindernisbereich am Fahrdraht. Dieser freie Fall wird nach einer bestimmten Wegstrecke dadurch gebremst, daß der mit dem Unterarm verbundene Fangfinger (26) auf den Fangarm (25) auftrifft und diesen nach unten bewegt. Diese Bewegung wird über den Antriebshebel (15) und die Verbindungsstange (16) auf den Kolben des Rollmembranantriebs weitergeleitet. Dieser bewegt sich nun so lange gegen den im Rollmembranantrieb vorhandenen Druck, bis die Fallenergie des Stromabnehmers aufgezehrt ist. Ein Zurückfedern wird durch den nach links sperrenden Freilauf an der Antriebsstange (20) verhindert. Der Rollmembranantrieb hat jetzt die Funktion eines Stoßdämpfers, der verhindert, daß der Stromabnehmer beim Fall aus großer Höhe hart auf den Grundrahmen aufschlägt und dadurch weiterer Schaden entsteht.

Die Rückstellung der Einrichtung zur Stromabnehmerschnellabsenkung wird durch den vom Fahrerstand aus gegebenen Senkbefehl für den Stromabnehmer eingeleitet. Durch den Senkbefehl wird die Druckluftzufuhr unterbrochen und der Druck im Rollmembranantrieb abgebaut. Dadurch wird im Normalfall der Stromabnehmer in seine Ruhelage abgesenkt. Nach der Auslösung der Schnellabsenkung befindet sich der Kolben des Rollmembranantriebs wegen der Freigabe des Angriffspunktes an der Unterarmwelle jedoch noch nicht in seiner Ruhelage. Diese wird mit Hilfe der Feder (19) herbeigeführt. Dadurch wird gleichzeitig über die Verbindungsstange (16) der Rastarm (28) in seine Ausgangslage gebracht, die Rastnase (27) schiebt mit ihrem Rücken im Vorbeigleiten den federbelasteten Sperrbolzen (29a) der Betätigungseinheit (29) zurück, der dann wieder vor die Rastnase (27) des Rastarms (28) tritt. Gleichzeitig wird auch durch die Rückstellnocke (32) die Sperrklinke (34) rückgestellt. Nun kann der Stromabnehmer durch einen Hebebefehl vom Fahrerstand aus wieder normal angehoben werden. Die selbsttätige Rückstellung ist besonders dann vorteilhaft, wenn die zur Auslösung der Schnellabsenkung führende Kraft keine ernsten Beschädigungen am Stromabnehmer herbeigeführt hat und dem erneuten Anlegen des Stromabnehmers an den Fahrdraht nichts im Wege steht.

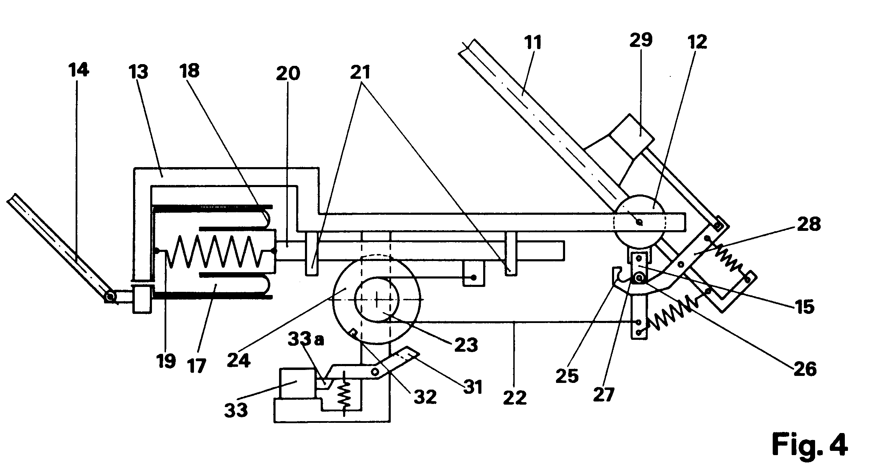

Ein anderes Ausführungsbeispiel der Erfindung ist in Fig. 4 dargestellt. Hier wird die Kraft des Rollmembranantriebs (17) über die in Lagern (21) geführte Antriebsstange (20) und ein Zugmittel (22), z. B. eine Kette, durch die Umlenkrolle (23) umgelenkt und zum Antriebshebel (15) geleitet. Der Antriebshebel ist gelenkig mit der Unterarmwelle (12) verbunden und stützt sich mit dem Fangfinger (26) gegen die Rastnase (27) auf den Rastarm (28) ab, der seinerseits an einem mit der Unterarmwelle fest verbundenen Ausleger beweglich befestigt ist. Kommt ein Befehl zur Schnellabsenkung an die Betätigungseinheit (29), so zieht diese kurzzeitig am Rastarm (28), wodurch der Fangfinger (26) und damit der Antriebshebel (15) freigegeben wird. Durch den Befehl zur Schnellabsenkung hat gleichzeitig die Betätigungseinheit (33) den Sperrbolzen (33a) zurückgezogen, wodurch sich der Klemmhebel (31) an die Freilaufscheibe (24) legt. Dadurch wird bewirkt, daß sich die Freilaufscheibe (24) nur noch entgegen dem Uhrzeigersinn, nicht jedoch im Uhrzeigersinn drehen kann. Die Umlenkrolle (23), die mit dem Zugmittel (22) in form- oder kraftschlüssiger Verbindung steht, ist mit der Freilaufscheibe fest verbunden. Durch diese Anordnung kann sich der Kolben des Rollmembranantriebs nur in den Zylinder hinein, also nach links bewegen, da der Freilauf nur noch Bewegungen in dieser Richtung zuläßt. Durch die Freigabe des Antriebshebels (15) fällt der Stromabnehmer durch Schwerkraft schlagartig nach unten zusammen. Der freie Fall des Stromabnehmers wird nach einer bestimmten Strecke dadurch gebremst, daß der Fangfinger (26) auf den Fangarm (25) auftrifft und dadurch die Energie des fallenden Stromabnehmers über das Zugmittel auf den Rollmembranantrieb übertragen wird. Der Kolben des Rollmembranantriebs wird nun so lange gegen den darin vorhandenen Druck bewegt, bis die Fallenergie des Stromabnehmers aufgezehrt ist.

Die Rückstellung der in Fig. 4 dargestellten Einrichtung zur Stromabnehmerschnellabsenkung erfolgt durch Ablassen des Drucks im Rollmembranantrieb vom Fahrerstand aus. Soweit die Rückstellkräfte nicht durch das Gewicht des Stromabnehmers aufgebracht werden, erfolgt die Rückstellung durch eine dem Rollmembranantrieb zugeordnete Feder (19) und eine am Antriebshebel (15) angreifende Feder, die den Antriebshebel (in der Zeichnung) nach rechts zieht, so daß der Fangfinger (26) wieder über die Rastnase (27) gleitet und rechts von dieser zu liegen kommt. Diese Feder kann schwach dimensioniert werden, da die Rückstellarbeit gering ist. Der freie Fall des Stromabnehmers wird nach dem Ansprechen der Schnellabsenkung durch diese Feder nicht behindert. Gleichzeitig wird auch durch die Rückstellnocke (32) der Klemmhebel (31) rückgestellt.

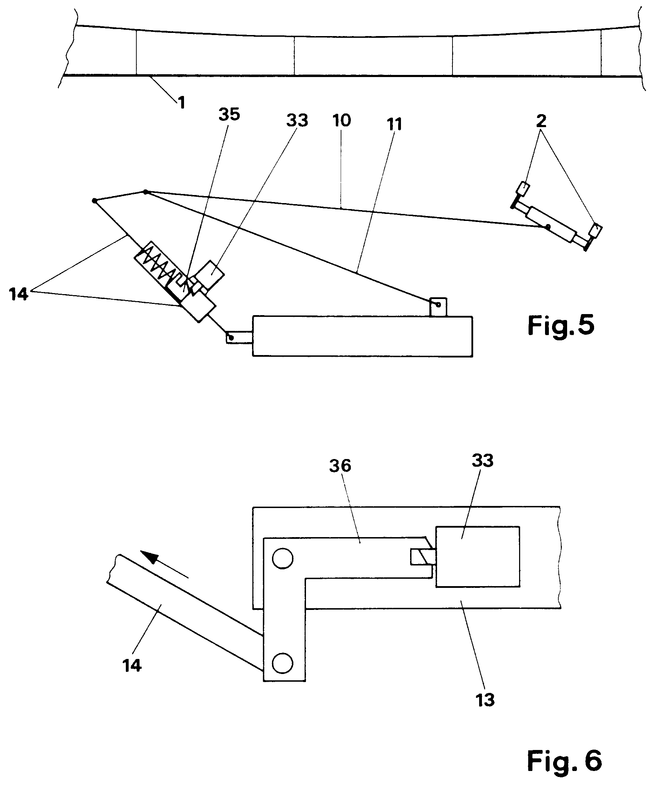

In Fig. 5 ist ein Halbscherenstromabnehmer dargestellt, bei dem die Schnellabsenkung durch eine Längenänderung der Lenkerstange (14) bewirkt wird. In diesem Fall wird der Steuerbefehl zur Schnellabsenkung an die Betätigungseinheit (33) gegeben. Die Lenkerstange (14) besteht hier aus zwei ineinander verschieblichen Teilen, die über ein Rastelement (35) und den Sperrbolzen der Betätigungseinheit (33) starr miteinander verbunden sind. Wird die Betätigungseinheit (33) aktiviert, so wird das Rastelement (35) freigegeben und die Lenkerstange (14) erfährt eine Verlängerung und bewirkt hierdurch das Herabfallen des Oberarms (10). Der nach unten fallende Oberarm wird durch eine in der Lenkerstange angeordnete Dämpfungseinheit gedämpft.

In Fig. 6 ist eine Ausführung dargestellt, bei der die Lenkerstange (14) über einen Lenkerstangenlagerhebel (36) mit dem Grundrahmen (13) beweglich verbunden ist. Der Lenkerstangenlagerhebel (36) ist durch den Sperrbolzen der Betätigungseinheit (33) fixiert. Durch den Befehl zur Schnellabsenkung aktiviert gibt die Betätigungseinheit (33) den Lenkerstangenlagerhebel frei, wodurch eine funktionelle Verlängerung der Lenkerstange (14) eintritt und der Oberarm, wie in Fig. 5 dargestellt, nach unten fällt.

Bei Ausführungen der Stromabnehmerschnellabsenkung gemäß den Beispielen in Fig. 5 und Fig. 6 werden den Hubantrieben der betreffenden Stromabnehmer Freilaufeinrichtungen, wie sie in Fig. 3 und Fig. 4 beispielhaft dargestellt sind, zugeordnet, um nach dem Auslösen der Schnellabsenkung ein Ansteigen des Unterarms (11) zu verhindern.

## Patentansprüche

1. Stromabnehmer für elektrisch angetriebene Fahrzeuge mit Oberleitungsversorgung, bestehend aus einem Grundrahmen (13) und einem darauf aufgebauten Scherensystem mit Ober- und Unterarmen (10,11), welches eine Wippe (5) mit Schleifstücken (2) trägt, ferner ausgestattet mit einem Hubantrieb zur Erzeugung der Schleifstückanpreßkraft und einer Einrichtung zur Schnellabsenkung, wobei bei Einleitung einer unzulässig hohen frontalen Kraft auf ein Schleifstück (2) oder Komponenten der Wippe (5) oder des Oberarms (10) eine Auslenkung dieser Teile in Bezug auf das Scheitelgelenk zwischen Wippe (5) und Oberarm (10) oder auf das Gelenk zwischen Oberarm (10) und Unterarm (11) erfolgt, welche das Ansprechen oder Auslösen von elektrischen, hydraulischen oder pneumatischen Betätigungselementen und dadurch die Abgabe eines Signals oder die Übertragung einer Kraft zur Auslösung der Schnellabsenkung bewirkt,
**dadurch gekennzeichnet**, daß die Wippe (5) entweder in Bezug auf das Scheitelgelenk oder durch eine bewegliche Zone im Bereich des Oberarms (10) in Fahrzeuglängsrichtung auslenkbar gelagert ist.

2. Stromabnehmer nach Anspruch 1, **dadurch gekennzeichnet**, daß die ausgelenkten Teile (2,3,6) mit den nicht ausgelenkten Teilen über eine Parallelogrammführung (30) verbunden sind.

3. Stromabnehmer nach Anspruch 2, **dadurch gekennzeichnet**, daß die Parallelogrammführung Stabfedern enthält.

4. Stromabnehmer nach Anspruch 1, **dadurch gekennzeichnet**, daß die ausgelenkten Teile mit den nicht ausgelenkten Teilen über eine Bahnführung verbunden sind.

5. Stromabnehmer nach einem der vorangehenden Ansprüche, **dadurch gekennzeichnet**, daß durch das Signal oder die übertragene Kraft zur Auslösung der Schnellabsenkung elektrischmagnetische, hydraulische oder pneumatische Betätigungseinheiten aktivierbar sind, welche zumindest einen der Angriffspunkte des Hubantriebs (17) freigeben, der einerseits durch Hebel (15,16) mit der Unterarmwelle (12) und andererseits mit dem Grundrahmen (13) oder einer weiteren Unterarmwelle verbunden ist, und welche durch Aktivierung eines Brems- oder Freilaufsystems eine weitere Längenveränderung des Hubantriebs (17) in Kraftrichtung verhindern.

6. Stromabnehmer nach Anspruch 5, **dadurch gekennzeichnet**, daß durch Aktivierung der Betätigungseinheiten a) die Länge der Lenkerstange (14), welche über oder unter dem Unterarm (11) liegt, verändert wird oder b) einer der Angriffspunkte der Lenkerstange (14) freigegeben und dadurch die funktionelle Länge der Lenkerstange verändert wird.

7. Stromabnehmer nach einem der vorangehenden Ansprüche, **dadurch gekennzeichnet**, daß die Größe der eine Auslenkung bewirkenden Kraft über die gesamte Steighöhe des Stromabnehmers gleich ist, und daß die Auslenkung aus einer Ruhezone heraus und gegen die Kraft von Federn erfolgt.

8. Stromabnehmer nach einem der vorangehenden Ansprüche, **dadurch gekennzeichnet**, daß Sensoren die unzulässig hohe frontale Kraft erfassen und Signale abgeben, daß die genannten Betätigungselemente das unkontrollierte Aufstellen des Stromabnehmers auf die maximale Steighöhe unter Abgabe eines Signals feststellen, und daß alle diese Signale unter Aktivierung der Betätigungseinheiten die Schnellabsenkung auslösen.

9. Stromabnehmer nach einem der vorangehenden Ansprüche, **dadurch gekennzeichnet**, daß der Hubantrieb aus einem pneumatischen Rollmembranantrieb (17) besteht.

10. Stromabnehmer nach einem der vorangehenden Ansprüche, **dadurch gekennzeichnet**, daß der Hubantrieb (17) zur Dämpfung der Fallbewegung des Stromabnehmers nach Auslösung der Schnellabsenkung dient.

11. Stromabnehmer nach einem der vorangehenden Ansprüche, **dadurch gekennzeichnet**, daß die Schnellabsenkung durch sprunghaften Druckabbau im Hubantrieb (17) mit Hilfe einer durch ein Auslösesignal angesteuerten elektrisch-magnetischen, hydraulischen oder pneumatischen Betätigungseinheit und eines am Hubantrieb (17) befindlichen gesteuerten Ventils herbeigeführt wird.

12. Stromabnehmer nach einem der vorangehenden Ansprüche, **dadurch gekennzeichnet**, daß die Rückstellung der Einrichtung zur Schnellabsenkung selbsttätig erfolgt.

13. Stromabnehmer nach Anspruch 9, **dadurch gekennzeichnet**, daß eine Rückstellfeder (19) des Rollmembranantriebs (17) als zusätzlicher Senkantrieb dient.

## Claims

1. Current collector for electrically driven vehicles with an overhead power supply comprising a base frame (13) and a pantograph system mounted thereon with upper and lower arms (10,11), which carries a rocker (5) with collector shoes (2), and further provided with a lifting actuator for producing the collector shoe contact force and a device for rapid lowering, whereby if an impermissibly high frontal force is applied to a collector shoe (2) or components of the rocker (5) or of the upper arm (10) a deflection of these components occurs with respect to the crown joint between the rocker (5) and upper arm (10) or to the joint between the upper arm (10) and lower arm (11) which causes the actuation or tripping of electrical, hydraulic or pneumatic actuating elements and thus the production of a signal or the transmission of a force to initiate the rapid lowering, characterised in that the rocker (5) is mounted so as to be deflectable in the longitudinal direction of the vehicle either with respect to the crown joint or by a movable zone in the region of the upper arm (10).

2. Current collector as claimed in Claim 1, characterised in that the deflected components (2,3,6) are connected to the non-deflected components by means of a parallelogram linkage (30).

3. Current collector as claimed in Claim 2, characterised in that the parallelogram linkage includes bar springs.

4. Current collector as claimed in Claim 1, characterised in that the deflected components are connected to the non-deflected components by means of a track guide.

5. Current collector as claimed in one of the preceding claims, characterised in that electro-magnetic, hydraulic or pneumatic actuating elements may be activated by the signal or the transmitted force for initiating the rapid lowering, which release at least one of the engagement points of the lifting actuator (17) which is connected on the one hand by levers (15,16) to the lower arm shaft (12) and on the other hand to the base frame (13) or a further lower arm shaft and which prevent a further change in length of the lifting actuator (17) in the force direction by activating a braking or free-wheeling system.

6. Current collector as claimed in Claim 5, characterised in that as a result of activating the actuating units
a) the length of the guide rod (14), which is situated above or below the lower arm (11), is altered or
b) one of the engagement points of the guide rod (14) is released and the functional length of the guide rod is thereby altered.

7. Current collector as claimed in one of the preceding claims, characterised in that the magnitude of the force effecting a deflection is the same over the entire lifting height of the current collector and that the deflection occurs out of a rest zone and against the force of springs.

8. Current collector as claimed in one of the preceding claims, characterised in that sensors detect the impermissibly high frontal force and produce signals, that the said actuating elements detect the uncontrolled erection of the current collector to the maximum lifting height and produces a signal and that all these signals initiate the rapid lowering whilst activating the actuating elements.

9. Current collector as claimed in one of the preceding claims, characterised in that the lifting actuator comprises a pneumatic rolling membrane actuator (17).

10. Current collector as claimed in one of the preceding claims, characterised in that the lifting actuator (17) serves to damp the falling movement of the current collector after initiation of the rapid lowering.

11. Current collector as claimed in one of the preceding claims, characterised in that the rapid lowering is caused by sudden pressure reduction in the lifting actuator (17) with the aid of an electro-magnetic, hydraulic or pneumatic actuating unit, which is controlled by an initiating signal, and a controlled valve situated on the lifting actuator (17).

12. Current collector as claimed in one of the preceding claims, characterised in that the re-setting of the device for rapid lowering occurs automatically.

13. Current collector as claimed in Claim 9, characterised in that a restoring spring (19) of the rolling membrane actuator (17) serves as an additional lowering actuator.

## Revendications

1. Pantographe pour véhicules à propulsion électrique comportant une alimentation par ligne aérienne, composé d'un cadre de base (13) et d'un système à parallélogramme articulé, constitué au-dessus de lui, avec des bras supérieur et inférieur (10, 11) et portant un archet (5) équipé de pièces de frottement (2), équipé en outre avec un entraînement de levage, pour produire la force de pressage de pièce de frottement et un dispositif de descente rapide, un débattement de ces parties, par rapport à l'articulation de sommet entre l'archet (5) et le bras supérieur (10) ou par rapport à l'articulation entre bras supérieur (10) et bras inférieur (11), s'effectuant lors de l'introduction d'une force frontale de valeur inadmissible sur la pièce de frottement (2) ou dans les composants de l'archet (5) ou du bras supérieur (10), débattement provoquant la réaction ou le déclenchement d'éléments d'actionnement électriques, hydrauliques ou pneumatiques et, de ce fait l'envoi d'un signal ou la transmission d'une force pour le déclenchement de la descente rapide, caractérisé en ce que l'archet (5) est monté de façon à pouvoir débattre, soit par rapport à l'articulation de sommet ou au moyen d'une région mobile se trouvant dans la zone du bras supérieur (10), dans la direction longitudinale du véhicule.

2. Pantographe sel on la revendication 1, caractérisé en ce que les parties (2, 3, 6) pouvant effectuer un débattement sont reliées aux parties ne pouvant pas effectuer de débattement par l'intermédiaire d'un guidage à parallélogramme (30).

3. Pantographe selon la revendication 2, caractérisé en ce que le guidage à parallélogramme contient des ressorts en acier.

4. Pantographe selon la revendication 1, caractérisé en ce que les parties pouvant effectuer un débattement sont reliées aux parties ne pouvant pas effectuer de débattement par l'intermédiaire d'un guidage à suivi de trajectoire.

5. Pantographe selon l'une des revendications précédentes caractérisé en ce que, des ensembles d'actionnement électromagnétiques, hydrauliques ou pneumatiques peuvent, du fait du signal ou de la force transmise pour produire la descente rapide être activés et libérer au moins l'un des points d'action de l'entraînement de levage (17), qui est relié d'une part, au moyen de leviers (15, 16) à l'arbre de bras inférieur (12), et, d'autre part, au cadre de base (13) ou à un autre arbre de bras inférieur, et qui, par activation d'un système de freinage ou de marche à vide, empêchent tout autre modification de longuer de l'entraînement de levage (17) dans la direction de la force.

6. Pantographe salon la revendication 5, caractérisé en ce que, par activation des ensembles d'actionnement :
a) il est provoqué une modification de la longueur de la barre d'articulation (14) située au-dessus ou au-dessous du bras inférieur (11), ou
b) il est libéré l'un des points d'action de la barre articulée (14) et il est de ce fait effectué une modification de la longueur fonctionnelle de la barre articulée.

7. Pantographe selon l'une des revendications précédentes, caractérisé en ce que la valeur de la force provoquant un débattement est égale sur toute la hauteur d'ascension du pantographe, et en ce que le débattement s'effectue depuis une zone de repos et à l'encontre de la force de ressorts.

8. Pantographe selon l'une des revendications précédentes, caractérisé en ce que des capteurs appréhendant une force frontale de valeur inadmissible et envoient des signaux, en ce que les éléments d'actionnement cités constatent l'érection incontrôlée du pantographe atteignant la hauteur d'ascension maximale en envoyant un signal, et en ce que tous ces signaux déclenchent la descente rapide avec activation des ensembles d'actionnement.

9. Pantographe selon l'une des revendications précédentes, caractérisé en ce que l'entraînement de levage est composé d'un entraînement à membrane roulante (17) travaillant pneumatiquement.

10. Pantographe selon l'une des revendications précédentes, caractérisé en ce que l'entraînement de levage (17) sert à amortir la course de chute du pantographe après déclenchement de la descente rapide.

11. Pantographe selon l'une des revendications précédentes, caractérisé en ce que la descente rapide est provoquée par abaissement par sauts de la pression dans l'entraînement de levage (17), à l'aide d'une unité d'actionnement électromagnétique, hydraulique ou pneumatique commandée par un signal de déclenchement et à l'aide d'une soupape commandée, se trouvant sur l'entraînement de levage (17).

12. Pantographe selon l'une des revendications précédentes, caractérisé en ce que le rappel du dispositif en descente rapide s'effectue automatiquement.

13. Pantographe selon la revendication 9, caractérisé en ce qu'un ressort de rappel (19) de l'entraînement à membrane roulante (17) sert d'entraînement d'abaissement supplémentaire.
